# EUROPEAN PATENT APPLICATION

(11) **EP 4 539 240 A2**
(43) Date of publication of application: **16.04.2025**
(21) Application number: 24206026.7
(22) Date of filing: 11.10.2024
(51) Int. Cl.: H01M 50/503, H01M 50/507

(54) **BUSBAR ASSEMBLY, BATTERY MODULE AND BATTERY PACK**

(30) Priority: 11.10.2023 CN 202322729522 U
(71) Applicant: Eve Power Co., Ltd., Jingmen, Hubei 448000 (CN)
(72) Inventor: REN, Chaoju, Hubei, 448000 (CN); LU, Jungao, Hubei, 448000 (CN); ZHANG, Guojiang, Hubei, 448000 (CN); XU, Yuhong, Hubei, 448000 (CN)
(74) Representative: Zacco GmbH

(57) **Abstract**

The present invention relates to the technical field of batteries, and discloses a busbar assembly, including: a plurality of battery connecting sheets (100), each battery connecting sheet (100) is able to connect, in series, cells (300) in adjacent rows, and the plurality of battery connecting sheets (100) is able to connect, in parallel, a plurality of cells (300) in the same row, thereby adapting to connection requirements of various cell arrangement manners. A positive connecting region (110) has a similar contour as a positive electrode post (310) of each cell (300), so that the connection is more stable and convenient; and moreover, since a width of a negative connecting region (120) is greater than a width of the positive connecting region (110), the negative connecting region (120) is configured for connecting a negative electrode in a circumferential direction of the positive electrode post (310), so that the structural strength is high, greater tensile and pressure stresses are borne, and breakage is unlikely to happen. In addition, the positive connecting region (110) of the battery connecting sheet (100) is further provided with a positioning hole (101), and the location of the battery connecting sheet (100) is able to be conveniently fixed by the positioning hole (101), so that the positioning between the battery connecting sheet (100) and the cell (300) is accurate, resulting in a good connection therebetween.

## Description

### Cross-Reference to Related Application

The present invention claims the priority of Chinese Patent Application 202322729522.2, filed to the China National Intellectual Property Administration (CNIPA) on October 11, 2023, which is hereby incorporated by reference in its entirety.

### Technical Field

The present invention relates to the technical field of batteries, and in particular to a busbar assembly, a battery module and a battery pack.

### Background

A battery module is usually formed by connecting a plurality of cells in series and in parallel, the series and parallel connection manners of the batteries are not only related to the assembly efficiency of the battery module, but also have influence on the main technical performance, the service life and the safety of the battery module. At present, for a cell of which a positive electrode and a negative electrode are arranged on the same side, the series and parallel connections between adjacent cells thereof usually need to use the metal strips to connect the positive electrode and/or negative electrode of the adjacent cells, the metal strips are relatively single in shapes and thus cannot meet the connection requirements of various arrangement forms of the cells, and the metal strips are narrow in widths, thus are prone to breakage after long-term use.

### Summary

The objective of the present invention is to provide a busbar assembly, a battery module and a battery pack, the busbar assembly satisfies connection requirements of arrangement manners of various cells, and is simple in structure, easy in processing, relatively high in strength and not prone to breakage.

In order to achieve the above objective, the present invention adopts the following technical solutions:
Some embodiments of the present invention provide a busbar assembly, including:
a plurality of battery connecting sheets connected to each other, which are configured for connecting, in series, two rows of cells arranged adjacent to each other along a first direction, and connecting, in parallel, a plurality of cells arranged in sequence along a second direction, and a positive electrode post and a negative electrode of each cell are arranged on the same side;
each battery connecting sheet includes a positive connecting region and a negative connecting region; the positive connecting region is connected to the positive electrode post of a previous cell; the negative connecting region is connected to the negative electrode of a next cell; positive connecting regions of two adjacent battery connecting sheets of the plurality of battery connecting sheets are connected to each other; and
a central axis of the positive connecting region of each battery connecting sheet coincides with a central axis of the negative connecting region of each battery connecting sheet, central axes of positive connecting regions of the plurality of battery connecting sheets are parallel, an outer edge of the positive connecting region is arc-shaped, a width of the negative connecting region is greater than a width of the positive connecting region, and the positive connecting region and/or the negative connecting region are provided with a positioning hole.

Some other embodiments of the present invention provide a battery module, including a plurality of cells, and the above busbar assembly, the busbar assembly is connected to the plurality of cells.

Still some other embodiments of the present invention provide a battery pack, including the above battery module.

The present invention has beneficial effects as follows:
The present invention provides a busbar assembly, including a plurality of battery connecting sheets connected to each other, each battery connecting sheet includes a positive connecting region and a negative connecting region, which are connected to each other, each battery connecting sheet is able to connect, in series, two rows of cells of which positive electrodes and negative electrodes are located on the same side, and the plurality of battery connecting sheets connect, in parallel, a plurality of cells in the same row, thereby adapting to connection requirements of various cell arrangement manners. An outer edge of the positive connecting region of each battery connecting sheet is arc-shaped, and a width of the negative connecting region is greater than a width of the positive connecting region, therefore compared with conventional metal strips, in the present invention, the positive connecting region is opposite to the positive electrode post of the cell and has a similar contour as the positive electrode post, so that a connection is more stable and convenient; and moreover, since the width of the negative connecting region is greater than the width of the positive connecting region, the negative connecting region is configured for connecting the negative electrode in a circumferential direction of the positive electrode post, so that a structural strength is high, greater tensile and pressure stresses are able to be borne, and breakage is unlikely to happen. Further, since the positive connecting region of the battery connecting sheet is provided with a positioning hole, the battery connecting sheet is able to be conveniently positioned and fixed, when the battery connecting sheet is carried or moved by using an auxiliary tool such as a clamp, a location of the battery connecting sheet is able to be easily determined by the positioning hole, and then the battery connecting sheet is able to be conveniently moved to a designated location, so that a positioning between the battery connecting sheet and the cell is accurate, thereby improving a connecting effect between the battery connecting sheet and the cell; and after being welded to the positive electrode or the negative electrode of the cell, there is no internal stress inside the battery connecting sheet, thereby avoiding an occurrence of wrinkles and even breakage caused by repeated tension or pressure of the battery connecting sheet during a long-term use of the battery module, and thus being conducive to ensuring a normal operation of the battery module.

The present invention provides a battery module, including a plurality of cells and the above busbar assembly, the a plurality of cells are arranged in an array along a first direction and a second direction, cells arranged along the first direction are able to be connected in series and cells arranged along the second direction are able to be connected in parallel by the busbar assembly, the busbar assembly is able to improve a connection strength between the plurality of cells, and meanwhile firmly fix the plurality of cells, resulting in a good stability.

The present invention further provides a battery pack, including the above battery module, a connection between the plurality of cells in the battery module and the busbar assembly is reliable, and a fixing effect between the busbar assembly and the plurality of cells is good, resulting in a good stability.

### Brief Description of the Drawings

To illustrate technical solutions in the embodiments of the present invention more clearly, a brief introduction on the drawings which are needed in the description of the embodiments of the present invention will be given below. Apparently, the drawings in the description below are merely some of the embodiments of the present invention, and those ordinary skilled in the art may also obtain other drawings according to the content of the embodiments of the present invention and these drawings without any creative effort.
Fig. 1 is a structural schematic diagram of a battery connecting sheet in Embodiment 1 of the present invention;
Fig. 2 is a top view of a battery connecting sheet and a cell in Embodiment 1 of the present invention;
Fig. 3 is a structural schematic diagram of a battery connecting sheet and a cell in Embodiment 1 of the present invention;
Fig. 4 is a top view of a busbar assembly including two battery connecting sheets in Embodiment 1 of the present invention;
Fig. 5 is a top view of a busbar assembly including three battery connecting sheets in Embodiment 1 of the present invention;
Fig. 6 is a top view of a busbar assembly including four battery connecting sheets in Embodiment 1 of the present invention;
Fig. 7 is a structural schematic diagram of a busbar assembly including four battery connecting sheets in Embodiment 1 of the present invention;
Fig. 8 is a top view of a battery connecting sheet in Embodiment 2 of the present invention;
Fig. 9 is a top view of a busbar assembly in Embodiment 2 of the present invention;
Fig. 10 is a top view of a busbar assembly and a cell in Embodiment 2 of the present invention;
Fig. 11 is a top view of a battery connecting sheet in Embodiment 3 of the present invention;
Fig. 12 is a top view of a busbar assembly in Embodiment 3 of the present invention;
Fig. 13 is a schematic structural diagram of a busbar assembly in Embodiment 3 of the present invention;
Fig. 14 is a top view of a busbar assembly and a cell in Embodiment 3 of the present invention;
Fig. 15 is a top view of a busbar assembly in Embodiment 4 of the present invention;
Fig. 16 is a structural schematic diagram of a busbar assembly in Embodiment 4 of the present invention;
Fig. 17 is a top view of a busbar assembly and a cell in Embodiment 4 of the present invention;
Fig. 18 is a top view of a battery connecting sheet in Embodiment 5 of the present invention; and
Fig. 19 is a top view of a busbar assembly in Embodiment 5 of the present invention.

### In the figures:

100. battery connecting sheet; 101. positioning hole; 110. positive connecting region; 120. negative connecting region; 121. avoidance portion; 130. first buffer portion; 131. first current-limiting hole; 200. connecting arm; 210. second buffer portion; 220. second current-limiting hole; 300. cell; 310. positive electrode post; 320. negative electrode.

### Detailed Description of the Embodiments

The present invention will be further described in detail below in combination with the drawings and embodiments. It can be understood that the specific embodiments described herein are merely configured for explaining the present invention, rather than limiting the present invention. In addition, it should be noted that, for ease of description, only some, but not all, of structures related to the present invention are shown in the drawings.

In the description of the present invention, unless otherwise specified and limited, the terms "connected", "connection" and "fixed" should be understood in a broad sense. For example, the connection may be a fixed connection, and may also be a detachable connection, or an integral connection; may be a mechanical connection, and may also be an electrical connection; and may be a direct connection, may be an indirect connection through an intermediate medium, and may also be internal communication between two elements or an interaction relationship of the two elements. For those ordinary skilled in the art, the specific meanings of the above terms in the present invention may be understood in specific situations.

In the present invention, unless otherwise specified and limited, a first feature being "above" or "below" a second feature may include that the first feature is in direct contact with the second feature, and may also include that the first feature and the second feature are not in direct contact but are in contact via another feature therebetween. Moreover, the first feature being "on", "above" and "over" the second feature includes that the first feature is directly above and obliquely above the second feature, or merely indicates that a horizontal height of the first feature is greater than that of the second feature. The first feature being "under", "below" and "beneath" the second feature includes that the first feature is directly below and obliquely below the second feature, or merely indicates that the horizontal height of the first feature is less than that of the second feature.

In the description of the present embodiment, orientation or location relationships indicated by terms "upper", "lower", "left", "right" and the like are orientation or location relationships shown on the basis of the drawings, and are merely for the convenience of description and simplifying the description, but do not indicate or imply that the referred apparatuses or elements must have specific orientations or must be constructed and operated in specific orientations, and thus cannot be construed as limitations to the present invention. In addition, the terms "first" and "second" are merely configured for distinguishing in terms of description, and do not have special meanings.

### Embodiment 1

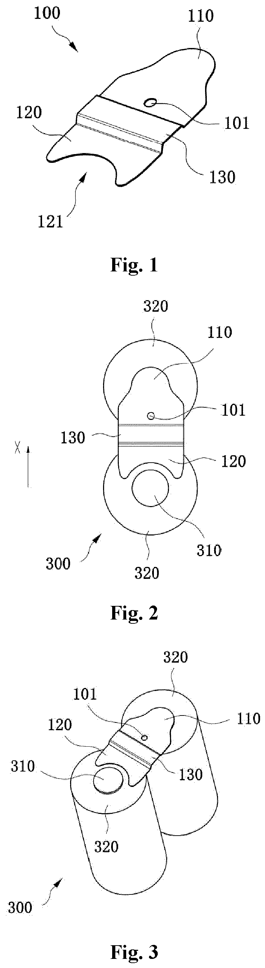

As shown in Figs. 1-3, the embodiment provides a busbar assembly, including a battery connecting sheet 100, the battery connecting sheet 100 includes a positive connecting region 110 and a negative connecting region 120, which are connected to each other, a central axis of the positive connecting region 110 coincides with a central axis of the negative connecting region 120, the battery connecting sheet 100 is able to connect, in series, two adjacent cells 300 arranged along a first direction, the first direction is an X-axis direction shown in Fig. 2, and a positive electrode post 310 and a negative electrode 320 of the cell 300 are arranged on the same side. The positive connecting region 110 of the battery connecting sheet 100 is connected to the positive electrode post 310 of a previous cell 300, and the negative connecting region 120 is connected to the negative electrode 320 of a next cell 300, so that the two adjacent cells 300 are connected in series. Moreover, in the embodiment, an outer edge of the positive connecting region 110 is arc-shaped, and the positive connecting region 110 is opposite to the positive electrode post 310 of the cell 300 and has a similar contour, so that a connection between the positive connecting region 110 and the positive electrode post 310 is more stable and convenient. The negative electrode 320 of the cell 300 is annularly arranged on a periphery of the positive electrode post 310, a width of the negative connecting region 120 is greater than a width of the positive connecting region 110, and the positive connecting region 110 is in smooth transition with the negative connecting region 120, a contact area between the negative connecting region 120 and the negative electrode 320 of the cell 300 is increased by expanding the width of the negative connecting region 120, so that a connecting structure is stable; and moreover, by using a relatively wide material, a structural strength of the battery connecting sheet 100 is able to be improved, so that the battery connecting sheet 100 is able to bear relatively large tensile and pressure stresses without being prone to breakage.

Further, in the embodiment, the positive connecting region 110 of the battery connecting sheet 100 is provided with a positioning hole 101, thereby facilitating a positioning and fixing of the battery connecting sheet 100. Exemplarily, the positioning hole 101 is arranged in the positive connecting region 110 and is located on the central axis of the positive connecting region 110. When an auxiliary tool such as a clamp is configured for carrying or moving the battery connecting sheet 100, a location of the battery connecting sheet 100 is able to be easily determined by the positioning hole 101, so that the battery connecting sheet 100 is able to be conveniently moved to a designated position, and after the battery connecting sheet 100 is conveyed to the designated position, the positive connecting region 110 is first aligned with a center of the positive electrode post 310 of the cell 300 and then welded to it, the negative connecting region 120 is welded to the negative electrode 320 of the cell 300, and since the location of the battery connecting sheet 100 is accurate, after the positive connecting region 110 and the negative connecting region 120 are respectively welded to the positive electrode post 310 and the negative electrode 320, the battery connecting sheet 100 is able to avoid being subjected to an oppositely directed torsional force on the battery connecting sheet 100 from the positive electrode post 310 and the negative electrode 320, so there is no internal stress inside the battery connecting sheet 100, thereby ensuring a good connecting effect between the battery connecting sheet 100 and the cell 300, and reducing an occurrence of wrinkles and even breakage caused by repeated tension or pressure of the battery connecting sheet 100 during a long-term use of a battery module, thereby being conducive to ensuring a normal operation of the battery module.

Since the positive electrode post 310 protrudes from an end surface of the negative electrode 320, when the battery connecting sheet 100 is connected to the positive electrode post 310 and the negative electrode 320, there may be an assembly height difference. Therefore, in the embodiment, a height difference between the positive connecting region 110 of the battery connecting sheet 100 and the end surface of the negative electrode 320 is greater than a height difference between the negative connecting region 120 and the end surface of the negative electrode 320. That is, the positive connecting region 110 is raised, thereby avoiding a situation in which the positive connecting region 110 is bent or broken due to a presence of the height difference between the positive electrode post 310 and the negative electrode 320 after the battery connecting sheet 100 is welded to the cell 300, and thus the connection between the cells 300 is more reliable. Optionally, a supporting block (not shown) is further arranged on a surface, close to the negative electrode 320, of the positive connecting region 110, the supporting block respectively abuts against the positive connecting region 110 and the negative electrode 320 of the cell 300, and the supporting block is insulated from the positive connecting region 110 and the negative electrode 320, thereby supporting the positive connecting region 110 of the battery connecting sheet 100 by the supporting block, and improving a connection stability between the battery connecting sheet 100 and the cell 300.

Of course, in some embodiments, the height difference between the positive connecting region 110 and the negative connecting region 120 is able to be formed by bending the negative connecting region 120 towards a side where the negative electrode 320 of the cell 300 is located.

Referring to Figs. 1-5, in some other embodiments, a first buffer portion 130 is arranged between the positive connecting region 110 and the negative connecting region 120 of the battery connecting sheet 100. Exemplarily, the first buffer portion 130 is shaped like the Chinese character "fL", and is able to be manufactured by processes such as bending or stamping, thereby being easy to process and high in production efficiency. Two ends of the first buffer portion 130 are respectively connected to the positive connecting region 110 and the negative connecting region 120 of the battery connecting sheet 100, and a height of an end of the first buffer portion 130 that is connected to the positive connecting region 110 is greater than a height of an end of the first buffer portion 130 that is connected to the negative connecting region 120, so as to form the height difference between the positive connecting region 110 and the negative connecting region 120. Further, when the battery module is assembled, the first buffer portion 130 shaped like the Chinese character " 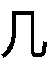 " is also able to absorb an installation tolerance existing after the welding of the battery connecting sheet 100 and the cell 300 is completed. By changing a bending degree of the first buffer portion 130 shaped like the Chinese character " 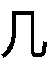 ", a relatively small installation tolerance is absorbed to avoid poor welding between the busbar assembly and the cell 300 resulting from an excessive large height difference of the cell 300 during production process and a tray flatness; and during a usage of the battery module, conditions such as bumping may occur, at this time, the first buffer portion 130 is also able to play a role of buffering an impact to prevent a relative displacement between the cells 300 that may be caused during a vibration process of the cells 300, thereby reducing the risk of breakage of the battery connecting sheet 100, and further improving the working reliability of the battery connecting sheet 100. In addition, the design of the first buffer portion 130 is able to also effectively absorb an expansion force generated by the cell 300 during a charging and discharging process.

Further, in the embodiment, the negative connecting region 120 of the battery connecting sheet 100 is provided with an avoidance portion 121, and the avoidance portion 121 is an arc-shaped notch fitting with the positive electrode post 310 of the cell 300, so that the avoidance portion 121 is able to avoid the positive electrode post 310 of the cell 300, thereby preventing the battery connecting sheet 100 from conducting the positive electrode post 310 and the negative electrode 320 of the cell 300 to lead to a short circuit, and thus ensuring a reliability and accuracy of circuit connection. Optionally, a distance between two positive electrode posts 310 of two cells 300 arranged adjacent to each other along the first direction is greater than a distance between a center of the positive connecting region 110 and an edge of the avoidance portion 121. Therefore, there is a gap between the negative connecting region 120 and the positive electrode post 310, which prevents the negative connecting region 120 from making contact with the positive electrode post 310 to lead to the short circuit.

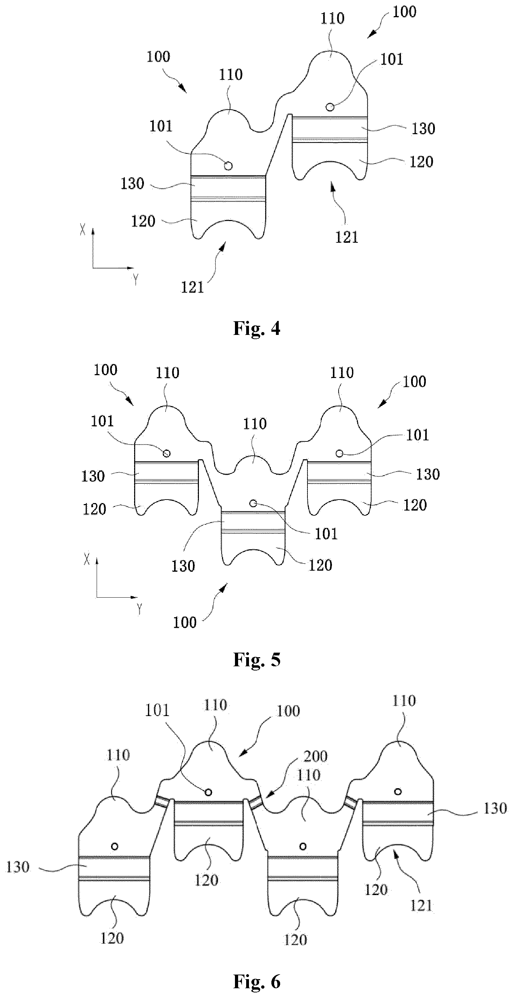

Continue referring to Figs. 4-7, a plurality of battery connecting sheets 100 are provided, central axes of positive connecting regions 110 of the plurality of battery connecting sheets 100 are parallel, and the plurality of battery connecting sheets 100 are connected to each other, so that a plurality of cells 300 in each row are connected in parallel. Optionally, each positive connecting region 110 is provided with a connecting arm 200, positive connecting regions 110 of the plurality of battery connecting sheets 100 are connected by the connecting arm 200, there is an included angle a between the connecting arm 200 and the central axis of the negative connecting region 120, and the plurality of battery connecting sheets 100 are arranged in an up-down staggered manner. An insulating film is arranged on a surface, close to the negative electrode 320, of the positive connecting region 110. The insulating film is also arranged on a surface, close to the negative electrode 320, of the connecting arm 200, thereby preventing the positive connecting region 110 and the connecting arm 200 from making contact with the negative electrode 320 to lead to the short circuit.

Further, as shown in Fig. 4, it is a technical solution in which two battery connecting sheets 100 are connected to each other, the two battery connecting sheets 100 in Fig. 4 are taken as an example for description, the positive connecting region 110 and the negative connecting region 120 of each battery connecting sheet 100 are able to be respectively connected to positive electrode posts 310 and negative electrodes 320 of two adjacent cells 300 arranged along the first direction, so that the two cells 300 arranged along the first direction are connected in series; and meanwhile, positive connecting regions 110 of the two battery connecting sheets 100 are connected to positive electrode posts 310 of the two adjacent cells 300 arranged along a second direction, and negative connecting regions 120 of the two battery connecting sheets 100 are connected to negative electrodes 320 of the two adjacent cells 300 arranged along the second direction, so that two adjacent columns of cells 300 arranged along the second direction are connected in parallel, the first direction is the X-axis direction shown in Fig. 4, and the second direction is the Y-axis direction shown in Fig. 4.

As shown in Fig. 5, it is a technical solution in which three battery connecting sheets 100 are connected to each other, and as shown in Figs. 6-7, it is a technical solution in which four battery connecting sheets 100 are connected to each other. Since the battery connecting sheet 100 in the embodiment is a standardized small unit component, a number of battery connecting sheets 100 in the busbar assembly is able to be adjusted according to a number of rows and a number of columns of the cells 300 in the battery module, so that the flexible applicability is good, and processing and quality detection tools are universal, thereby reducing the investment of manpower and financial resources, and reducing the cost.

More preferably, referring to Figs. 6-7, a second buffer portion 210 is arranged between two adjacent battery connecting sheets 100 of the plurality of battery connecting sheets 100, and two ends of the second buffer portion 210 are respectively connected to connecting arms 200 of the two adjacent battery connecting sheets 100. By arranging the second buffer portion 210, an installation tolerance or impact between two columns of cells 300 arranged along the second direction is able to be absorbed, thereby further reducing a risk of breakage of the battery connecting sheet 100, and improving a working reliability of the battery connecting sheet 100.

The embodiment provides a battery module, including a plurality of cells 300, and the above busbar assembly, and the plurality of cells 300 are arranged in an array along the first direction and the second direction, each battery connecting sheet 100 of the busbar assembly connects, in series, two adjacent cells 300 arranged along the first direction, and four battery connecting sheets 100, which are connected to each other along the second direction, connect, in parallel, a plurality of columns of cells 300 arranged along the second direction, that is, a current flows along the first direction and is converged along the second direction. In the embodiment, the busbar assembly is able to improve a connection strength between the cells 300, and meanwhile firmly fix the cells 300, so that a stability is good. Specifically, a number of busbar assemblies and a number of battery connecting sheets 100 in each busbar assembly are able to be adjusted according to a number of cells 300 in the battery module. Moreover, in the embodiment, since the connecting sheets of adjacent cells 300 are arranged in the up-down staggered manner, the cells 300 in adjacent rows in the battery module are able to be arranged in the staggered manner, so that a herringbone structure is formed between a plurality of continuous battery connecting sheets 100, and the arrangement manner is able to save the assembly space of the battery module, so that a structure of the battery module is more compact, and an assembly cost is reduced.

The embodiment further provides a battery pack, including the above battery module, and a connection between the plurality of cells 300 and the busbar assembly in the battery module is reliable, and a fixing effect between the busbar assembly and the plurality of cells 300 is good, so that a stability is good.

### Embodiment 2

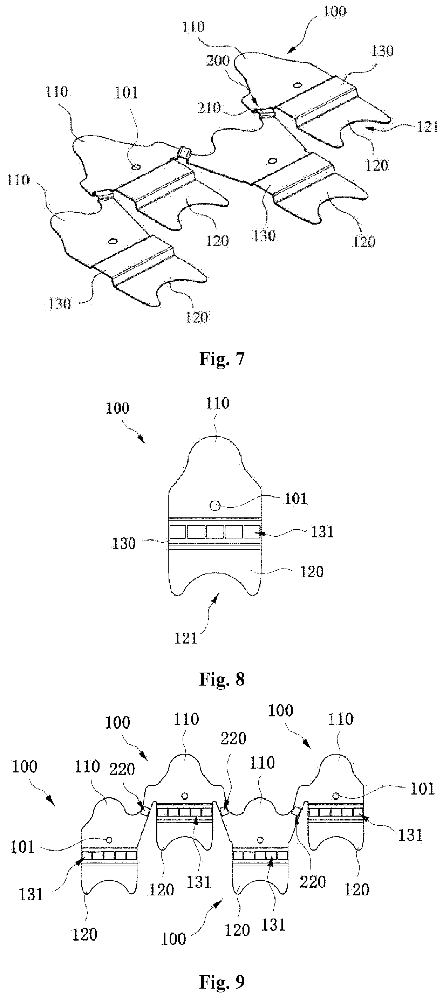

The embodiment provides a busbar assembly, as shown in Figs. 8-9, the busbar assembly differs from the busbar assembly in Embodiment 1 in that: the first buffer portion 130 of the battery connecting sheet 100 is provided with a plurality of first current-limiting holes 131, and the plurality of first current-limiting holes 131 are uniformly distributed on the first buffer portion 130. By providing the plurality of first current-limiting holes 131, a cross-sectional area of the first buffer portion 130 is less than cross-sectional areas of the positive connecting region 110 and the negative connecting region 120, and when a temperature of a circuit is too high due to extreme conditions such as an occurrence of the short circuit in the circuit, the first buffer portion 130 is able to be fused by self-heating, so as to quickly cut off the current between the plurality of cells 300 to cut off a current loop, thereby protecting the circuit and preventing explosion or fires, so that a safety performance is good.

Meanwhile, a narrow neck is formed at a joint of connecting arms 200 between the two battery connecting sheets 100, when the circuit has extreme conditions such as the short circuit, the narrow neck is fused due to thermal stress concentration to cut off the current in the circuit, thereby protecting the cells 300 connected to the battery connecting sheets 100.

Further, in order to improve a response speed of fusing the narrow neck when the circuit has extreme conditions such as the short circuit, in the embodiment, connecting arms 200 connected to each other of two adjacent battery connecting sheets 100 are provided with a second current-limiting hole 220, and the second current-limiting hole 220 is arranged at a middle position of the connecting arms 200. By providing the second current-limiting hole 220, a cross-sectional area at the connecting arms 200 is reduced, when the temperature of the circuit is too high due to extreme conditions such as the occurrence of the short circuit in the circuit, the connecting arms 200 at the second current-limiting hole 220 are able to be quickly fused by self-heating, so as to quickly cut off the current between adjacent rows of cells 300 to cut off the current loop, thereby protecting the current and improving the safety performance.

More preferably, in the embodiment, the first buffer portion 130 is coated with a low-melting-point metal, and meanwhile, the connecting arm 200 is also coated with the low-melting-point metal. The low-melting-point metal is tin; when the circuit has extreme conditions such as the short circuit, the current in the circuit is rapidly increased, an increase of the current causes a temperature rise of the circuit, when the temperature rises to melt the low-melting-point metal, a resistance of a coating region of the low-melting-point metal becomes large, such that temperatures of the first buffer portion 130 and the connecting arm 200 rise rapidly, and the low-melting-point metal is melted within a few milliseconds, and then the current is cut off to protect the circuit. By coating the low-melting-point metal, a dual protection effect is able to be achieved on the circuit, thereby further improving the safety performance.

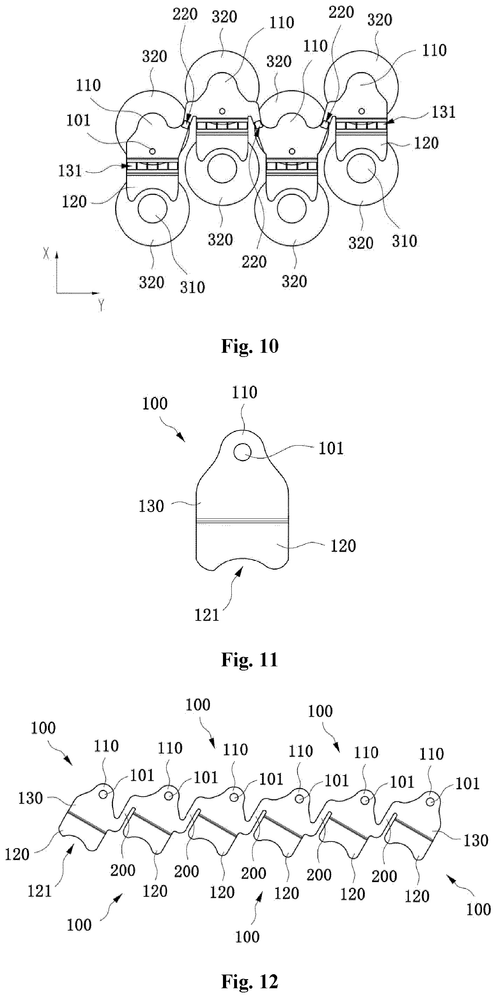

The embodiment provides a battery module, as shown in Fig. 10, including a plurality of cells 300, and the above busbar assembly, and the plurality of cells 300 are arranged in an array along the first direction and the second direction, the cells 300 arranged along the first direction are able to be connected in series and the cells 300 arranged along the second direction are able to be connected in parallel by the busbar assembly, the first direction is the X-axis direction in Fig. 10, and the second direction is the Y-axis direction in Fig. 10. The busbar assembly in the embodiment is able to improve the connection strength between the plurality of cells 300, and meanwhile firmly fix the plurality of cells 300, so that the stability is good.

The embodiment further provides a battery pack, including the above battery module, and the connection between the plurality of cells 300 and the busbar assembly in the battery module is reliable, and the fixing effect between the busbar assembly and the plurality of cells 300 is good, so that the stability is good.

The remaining structures in the embodiment are the same as those in Embodiment 1, thus details are not described herein again.

### Embodiment 3

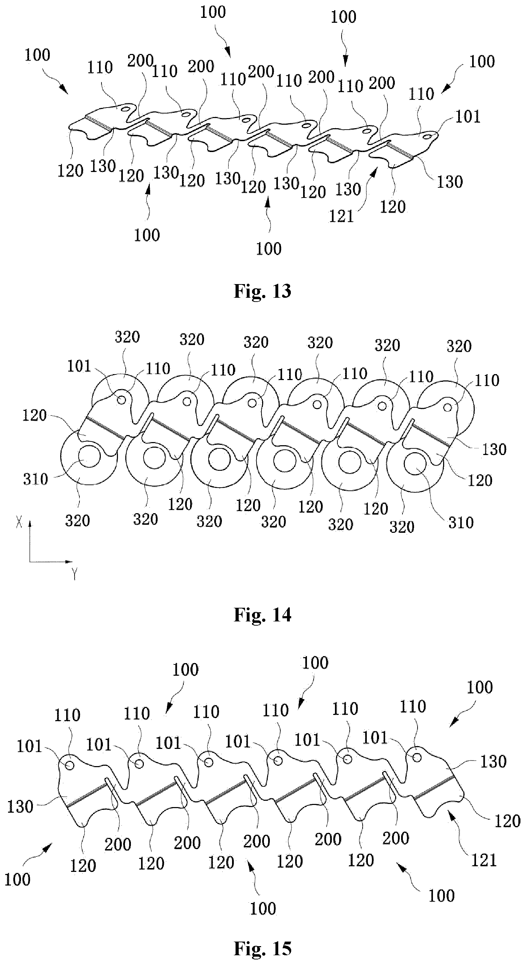

The embodiment provides a busbar assembly, as shown in Figs. 11-14, the busbar assembly includes one or more battery connecting sheets 100, central axes of the plurality of battery connecting sheets 100 are inclined rightwards, each battery connecting sheet 100 includes a positive connecting region 110 and a negative connecting region 120, which are connected to each other, a central axis of the positive connecting region 110 coincides with a central axis of the negative connecting region 120, each battery connecting sheet 100 is able to connect, in series, two adjacent cells 300 of which a positive electrode and the negative electrode 320 are arranged on the same side, wherein the positive connecting region 110 of the battery connecting sheet 100 is connected to a positive electrode post 310 of a previous cell 300, and the negative connecting region 120 is connected to the negative electrode 320 of a next cell 300, so that the two adjacent cells 300 are connected in series, the two adjacent cells 300 connected in series are arranged to form an included angle with the first direction, and the first direction is the X-axis direction shown in Fig. 14. By inclining the plurality of battery connecting sheets 100 towards one side, the busbar assembly is able to be suitable for a battery module in which two adjacent rows of cells 300 are arranged obliquely, so that the flexible applicability is good.

The plurality of battery connecting sheets 100 are able to connect, in parallel, a plurality of cells 300 arranged adjacent to each other along a second direction, the second direction is the Y-axis direction shown in Fig. 14, and then each battery connecting sheet 100 is able to connect two cells 300 in adjacent rows in series. At this time, connecting arms 200 on two adjacent battery connecting sheets 100 are parallel to central axes of the negative connecting regions 120 of the battery connecting sheets 100, and the connecting arms 200 are parallel to an arrangement direction of the two adjacent cells 300 connected in series, the plurality of battery connecting sheets 100 are located on the same straight line, the straight line is parallel to the second direction.

The embodiment provides a battery module, as shown in Fig. 14, including a plurality of cells 300, and the above busbar assembly, and the plurality of cells 300 are arranged in an array in a direction that forms an included angle with the first direction, and the second direction, the plurality of cells 300 arranged to form the included angle with the first direction are able to be connected in series and the plurality of cells 300 arranged along the second direction are able to be connected in parallel by the busbar assembly, the first direction is the X-axis direction in Fig. 14, and the second direction is the Y-axis direction in Fig. 14. The busbar assembly in the embodiment is able to improve the connection strength between the plurality of cells 300, and meanwhile firmly fix the plurality of cells 300, so that the stability is good.

The embodiment further provides a battery pack, including the above battery module, and the connection between the plurality of cells 300 and the busbar assembly in the battery module is reliable, and the fixing effect between the busbar assembly and the plurality of cells 300 is good, so that the stability is good.

The remaining structures in the embodiment are the same as those in Embodiment 1, thus details are not described herein again.

### Embodiment 4

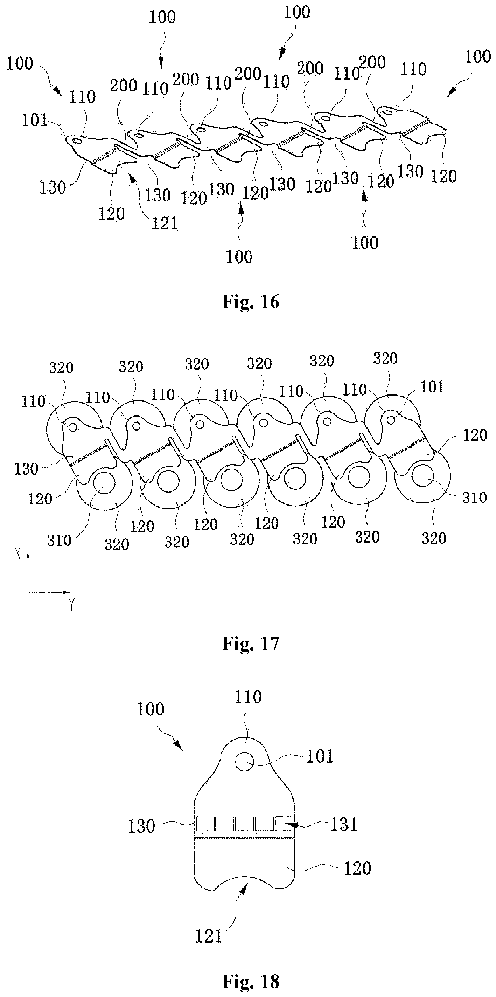

The embodiment provides a busbar assembly, as shown in Figs. 15-17, the busbar assembly includes one or more battery connecting sheets 100, central axes of the plurality of battery connecting sheets 100 are inclined leftwards, each battery connecting sheet 100 includes a positive connecting region 110 and a negative connecting region 120, which are connected to each other, a central axis of the positive connecting region 110 coincides with a central axis of the negative connecting region 120, each battery connecting sheet 100 is able to connect, in series, two adjacent cells 300 of which a positive electrode and the negative electrode 320 are arranged on the same side, wherein the positive connecting region 110 of the battery connecting sheet 100 is connected to a positive electrode post 310 of a previous cell 300, and the negative connecting region 120 is connected to the negative electrode 320 of a next cell 300, so that the two adjacent cells 300 are connected in series, the two adjacent cells 300 connected in series are arranged to form an included angle with the first direction, and the first direction is the X-axis direction shown in Fig. 17.

The plurality of battery connecting sheets 100 are able to connect, in parallel, two columns of cells 300 in adjacent rows, wherein the cells 300 connected in parallel are arranged in a direction opposite to the second direction, and the second direction is the Y-axis direction shown in Fig. 17. At this time, connecting arms 200 on two adjacent battery connecting sheets 100 are parallel to central axes of the negative connecting regions 120 of the battery connecting sheets 100, and the connecting arms 200 are parallel to an arrangement direction of the two adjacent cells 300 connected in series, the plurality of battery connecting sheets 100 are located on the same straight line, the straight line is parallel to the second direction.

The embodiment provides a battery module, as shown in Fig. 17, including a plurality of cells 300, and the above busbar assembly, and the plurality of cells 300 are arranged in an array in a direction that forms an included angle with the first direction, and the direction opposite to the second direction, the plurality of cells 300 arranged to form the included angle with the first direction is able to be connected in series and the plurality of cells 300 arranged in the direction opposite to the second direction are able to be connected in parallel by the busbar assembly, the first direction is the X-axis direction in Fig. 17, and the second direction is the Y-axis direction in Fig. 17. By arranging the battery connecting sheet 100 to incline leftwards or rightwards, the busbar assembly is able to suitable for various types of battery modules in which arrangement conditions of the cells 300 are different, and the busbar assembly in the embodiment is able to improve the connection strength between the plurality of cells 300, and meanwhile firmly fix the plurality of cells 300, so that the stability is good.

The embodiment further provides a battery pack, including the above battery module, and the connection between the plurality of cells 300 and the busbar assembly in the battery module is reliable, and the fixing effect between the busbar assembly and the plurality of cells 300 is good, so that the stability is good.

The remaining structures in the embodiment are the same as those in Embodiment 1, thus details are not described herein again.

### Embodiment 5

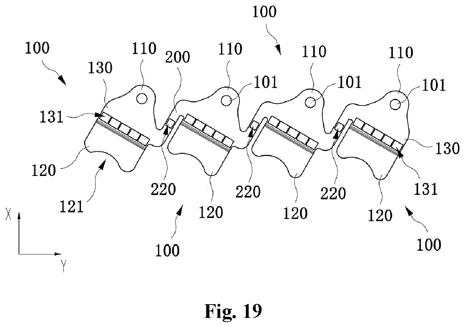

The embodiment provides a busbar assembly, as shown in Figs. 18-19, the busbar assembly includes a plurality of battery connecting sheets 100, central axes of the plurality of battery connecting sheets 100 are inclined rightwards, each battery connecting sheet 100 includes a positive connecting region 110 and a negative connecting region 120, which are connected to each other, a central axis of the positive connecting region 110 coincides with a central axis of the negative connecting region 120, each battery connecting sheet 100 is able to connect, in series, two adjacent cells 300 of which a positive electrode and the negative electrode 320 are arranged on the same side, wherein the positive connecting region 110 of the battery connecting sheet 100 is connected to a positive electrode post 310 of a previous cell 300, and the negative connecting region 120 is connected to the negative electrode 320 of a next cell 300, so that the two adjacent cells 300 are connected in series, the two adjacent cells 300 connected in series are arranged to form an included angle with the first direction, and the first direction is the X-axis direction shown in Fig. 19.

The plurality of battery connecting sheets 100 are able to connect, in parallel, two columns of cells 300 in adjacent rows, wherein the cells 300 connected in parallel are arranged along the second direction, and the second direction is the Y-axis direction shown in Fig. 17. At this time, connecting arms 200 on two adjacent battery connecting sheets 100 are parallel to central axes of the negative connecting regions 120 of the battery connecting sheets 100, and the connecting arms 200 are parallel to an arrangement direction of the two adjacent cells 300 connected in series, the plurality of battery connecting sheets 100 are located on the same straight line, the straight line is parallel to the second direction.

A first buffer portion 130 of the battery connecting sheet 100 is provided with a plurality of first current-limiting holes 131, and the plurality of first current-limiting holes 131 are uniformly distributed on the first buffer portion 130. By forming the plurality of first current-limiting holes 131, a cross-sectional area of the first buffer portion 130 is less than cross-sectional areas of the positive connecting region 110 and the negative connecting region 120, and when the temperature of the circuit is too high due to extreme conditions such as the occurrence of the short circuit in the circuit, the first buffer portion 130 is able to be fused by self-heating, so as to quickly cut off the current between the cells 300 to cut off a current loop, thereby protecting the circuit and avoiding explosion or fires, so that the safety performance is good.

Meanwhile, a narrow neck is formed at a joint of connecting arms 200 between two battery connecting sheets 100, when the circuit has extreme conditions such as the short circuit, the narrow neck is fused due to thermal stress concentration to cut off the current in the circuit, thereby protecting the cells 300 connected to the battery connecting sheets 100.

Further, in order to improve a response speed of fusing the narrow neck when the circuit has extreme conditions such as the short circuit, in the embodiment, connecting arms 200 connected to each other of two adjacent battery connecting sheets 100 are provided with a second current-limiting hole 220, and the second current-limiting hole 220 is arranged at a middle position of the connecting arms 200. By providing the second current-limiting hole 220, a cross-sectional area at the connecting arms 200 is reduced, when the temperature of the circuit is too high due to extreme conditions such as the occurrence of the short circuit in the circuit, the connecting arms 200 at the second current-limiting holes 220 is able to be quickly fused by self-heating, so as to quickly cut off the current between adjacent rows of cells 300 to cut off the current loop, thereby protecting the current and improving the safety performance.

More preferably, in the embodiment, the first buffer portion 130 is coated with a low-melting-point metal, and meanwhile, the connecting arm 200 is also coated with the low-melting-point metal. The low-melting-point metal is tin; when the circuit has extreme conditions such as the short circuit, the current in the circuit is rapidly increased, an increase of the current causes a temperature rise of the circuit, when the temperature rises to melt the low-melting-point metal, a resistance of a coating region of the low-melting-point metal becomes large, such that temperatures of the first buffer portion 130 and the connecting arm 200 rise rapidly, and the low-melting-point metal is melted within a few milliseconds, and then the current is cut off to protect the circuit. By coating the low-melting-point metal, a dual protection effect is able to be achieved on the circuit, thereby further improving the safety performance.

The embodiment provides a battery module, as shown in Fig. 19, including a plurality of cells 300, and the above busbar assembly, and the plurality of cells 300 are arranged in an array in a direction that forms an included angle with the first direction, and the second direction, the cells 300 arranged to form the included angle with the first direction are able to be connected in series and the cells 300 arranged along the second direction are able to be connected in parallel by the busbar assembly, the first direction is the X-axis direction in Fig. 19, and the second direction is the Y-axis direction in Fig. 19. The busbar assembly in the embodiment is able to improve the connection strength between the plurality of cells 300, and meanwhile firmly fix the plurality of cells 300, so that the stability is good.

The embodiment further provides a battery pack, including the above battery module, and the connection between the plurality of cells 300 and the busbar assembly in the battery module is reliable, and the fixing effect between the busbar assembly and the plurality of cells 300 is good, so that the stability is good.

The remaining structures in the embodiment are the same as those in Embodiment 1, thus details are not described herein again.

Apparently, the above embodiments of the present invention are merely examples for clearly illustrating the present invention, and are not intended to limit the implementations of the present invention. For those ordinary skilled in the art to which the present invention belongs, various obvious changes, readjustments and substitutions may be made without departing from the protection scope of the present invention. It is unnecessary and impossible to exhaustively list all implementations herein. Any modifications, equivalent substitutions and improvements, made within the spirit and principles of the present invention, shall fall within the protection scope of the claims of the present invention.

## Claims

1. A busbar assembly, comprising:
a plurality of battery connecting sheets (100) connected to each other, which are configured for connecting, in series, two rows of cells (300) arranged adjacent to each other along a first direction, and connecting, in parallel, a plurality of cells (300) arranged in sequence along a second direction, and a positive electrode post (310) and a negative electrode (320) of each cell (300) are arranged on the same side;
each battery connecting sheet (100) comprises a positive connecting region (110) and a negative connecting region (120), which are connected to each other, the positive connecting region (110) is connected to the positive electrode post (310) of a previous cell (300), and the negative connecting region (120) is connected to the negative electrode (320) of a next cell (300); positive connecting regions (110) of two adjacent battery connecting sheets (100) of the plurality of battery connecting sheets (100) are connected to each other; and
a central axis of the positive connecting region (110) of each battery connecting sheet (100) coincides with a central axis of the negative connecting region (120) of each battery connecting sheet (100), central axes of positive connecting regions (110) of the plurality of battery connecting sheets (100) are parallel, an outer edge of the positive connecting region (110) is arc-shaped, a width of the negative connecting region (120) is greater than a width of the positive connecting region (110), and the positive connecting region (110) is provided with a positioning hole (101).

2. The busbar assembly as claimed in claim 1, wherein the positive electrode post (310) protrudes from an end surface of the negative electrode (320), and when the battery connecting sheet (100) is connected to the positive electrode post (310) and the negative electrode (320), a height difference between the positive connecting region (110) and the end surface of the negative electrode (320) is greater than a height difference between the negative connecting region (120) and the end surface of the negative electrode (320).

3. The busbar assembly as claimed in claim 2, wherein a supporting block is arranged on a surface, close to the negative electrode (320), of the positive connecting region (110), and the supporting block respectively abuts against the positive connecting region (110) and the negative electrode (320); or
the negative connecting region (120) is bent towards a side where the negative electrode (320) is located.

4. The busbar assembly as claimed in claim 2, wherein the negative connecting region (120) is provided with an avoidance portion (121), the avoidance portion (121) is an arc-shaped notch fitting with the positive electrode post (310) of the cell (300), and the avoidance portion (121) is able to avoid the positive electrode post (310) of the cell (300).

5. The busbar assembly as claimed in claim 4, wherein a distance between two positive electrode posts (310) of two cells (300) arranged adjacent to each other along the first direction is greater than a distance between a center of the positive connecting region (110) and an edge of the avoidance portion (121), and there is a gap between the negative connecting region (120) and the positive electrode post (310).

6. The busbar assembly as claimed in claim 2, wherein a first buffer portion (130) is arranged between the positive connecting region (110) and the negative connecting region (120), and two ends of the first buffer portion (130) are respectively connected to the positive connecting region (110) and the negative connecting region (120).

7. The busbar assembly as claimed in claim 6, wherein the first buffer portion (130) is provided with a plurality of first current-limiting holes (131), and the plurality of first current-limiting holes (131) are uniformly distributed on the first buffer portion (130).

8. The busbar assembly as claimed in claim 6, wherein the first buffer portion (130) is coated with a low-melting-point metal.

9. The busbar assembly as claimed in claim 1, wherein each positive connecting region (110) is provided with a connecting arm (200), positive connecting regions (110) of the plurality of battery connecting sheets (100) are connected by the connecting arm (200), the connecting arm (200) is parallel to a central axis of the negative connecting region (120), and the plurality of battery connecting sheets (100) are located on the same straight line; or
there is an included angle α between the connecting arm (200) and the central axis of the negative connecting region (120), and the plurality of battery connecting sheets (100) are arranged in an up-down staggered manner.

10. The busbar assembly as claimed in claim 9, wherein at least one of the following is satisfied:
an insulating film is arranged on a surface, close to the negative electrode (320), of the positive connecting region (110);
the insulating film is arranged on a surface, close to the negative electrode (320), of the connecting arm (200).

11. The busbar assembly as claimed in claim 9, wherein the connecting arm (200) is provided with a second current-limiting hole (220), and the second current-limiting hole (220) is arranged at a middle position of the connecting arm (200).

12. The busbar assembly as claimed in claim 9, wherein a second buffer portion (210) is arranged between two adjacent battery connecting sheets (100) of the plurality of battery connecting sheets (100), and two ends of the second buffer portion (210) are respectively connected to connecting arms (200) of the two adjacent battery connecting sheets (100).

13. The busbar assembly as claimed in any one of claims 1-12, wherein the positioning hole (101) is arranged in the positive connecting region (110) and is located on the central axis of the positive connecting region (110).

14. A battery module, comprising a plurality of cells (300), and the busbar assembly as claimed in any one of claims 1-13, the busbar assembly is connected to the plurality of cells (300).

15. A battery pack, comprising the battery module as claimed in claim 14.
